(19) **Europäisches Patentamt**
**European Patent Office**
**Office européen des brevets**

(11) **EP 2 817 137 B1**

(12) **EUROPEAN PATENT SPECIFICATION**

(45) Date of publication and mention
of the grant of the patent:
**27.03.2019 Bulletin 2019/13**

(51) Int Cl.:
***B29C 33/38*** (2006.01)

(21) Application number: **13707786.3**

(86) International application number:
**PCT/US2013/027279**

(22) Date of filing: **22.02.2013**

(87) International publication number:
**WO 2013/126667 (29.08.2013 Gazette 2013/35)**

(54) **HIGH THERMAL CONDUCTIVITY CO-INJECTION MOLDING SYSTEM**

KOINJEKTIONSFORMSYSTEM MIT HOHER WÄRMELEITFÄHIGKEIT

SYSTÈME DE MOULAGE PAR CO-INJECTION À CONDUCTIVITÉ THERMIQUE ÉLEVÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2012 US 201261602650 P**

(43) Date of publication of application:
**31.12.2014 Bulletin 2015/01**

(73) Proprietor: **iMFLUX, Inc.**
**Wilmington, DE 19801 (US)**

(72) Inventors:
• **BERG, Charles John, Jr.**
**Wyoming, OH 45215 (US)**
• **ALTONEN, Gene, Michael**
**West Chester, Ohio 45069 (US)**
• **NEUFARTH, Ralph, Edwin**
**Liberty Township, Ohio 45011 (US)**
• **BOSWELL, Emily, Charlotte**
**Cincinnati, Ohio 45202 (US)**
• **LAYMAN, John Moncrief**
**Liberty Township, Ohio 45044 (US)**

(74) Representative: **Hoyng Rokh Monegier LLP**
**Rembrandt Tower, 31st Floor**
**Amstelplein 1**
**1096 HA Amsterdam (NL)**

(56) References cited:
| | |
|---|---|
| **WO-A1-03/051610** | **DE-A1- 3 740 916** |
| **DE-A1- 4 226 768** | **FR-A1- 2 738 767** |
| **GB-A- 2 059 327** | **JP-A- H07 148 801** |
| **JP-A- H07 164 498** | **JP-A- 2004 050 622** |
| **US-A- 5 405 660** | **US-A- 5 800 751** |
| **US-A- 5 853 630** | **US-A- 5 855 963** |
| **US-A1- 2009 098 234** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to systems and methods for injection molding and, more particularly, to systems and methods for producing co-injection molded parts at low constant pressure.

BACKGROUND

Injection molding is a technology commonly used for high-volume manufacturing of parts made of meltable material, most commonly of parts made of thermoplastic polymers. During a repetitive injection molding process, a plastic resin, most often in the form of small beads or pellets, is introduced to an injection molding machine that melts the resin beads under heat, pressure, and shear. Such resin can include a masterbatch material along with one or more colorants, additives, fillers, etc. The now molten resin is forcefully injected into a mold cavity having a particular cavity shape. The injected plastic is held under pressure in the mold cavity, cooled, and then removed as a solidified part having a shape that essentially duplicates the cavity shape of the mold. The mold itself may have a single cavity or multiple cavities. Each cavity may be connected to a flow channel by a gate, which directs the flow of the molten resin into the cavity. A molded part may have one or more gates. It is common for large parts to have two, three, or more gates to reduce the flow distance the polymer must travel to fill the molded part. The one or multiple gates per cavity may be located anywhere on the part geometry, and possess any cross-section shape such as being essentially circular or be shaped with an aspect ratio of 1.1 or greater. Thus, a typical injection molding procedure comprises four basic operations: (1) heating the plastic in the injection molding machine to allow it to flow under pressure; (2) injecting the melted plastic into a mold cavity or cavities defined between two mold halves that have been closed; (3) allowing the plastic to cool and harden in the cavity or cavities while under pressure; and (4) opening the mold halves to cause the part to be ejected from the mold.

The molten plastic resin is injected into the mold cavity and the plastic resin is forcibly pushed through the cavity by the injection molding machine until the plastic resin reaches the location in the cavity furthest from the gate. The resulting length and wall thickness of the part is a result of the shape of the mold cavity.

While it may be desirous to reduce the wall thickness of injected molded parts to reduce the plastic content, and thus cost, of the final part; reducing wall thickness using a conventional injection molding process can be an expensive and a non-trivial task, particularly when designing for wall thicknesses less than about 1.0 millimeter. As a liquid plastic resin is introduced into an injection mold in a conventional injection molding process, the material adjacent to the walls of the cavity immediately begins to "freeze," or solidify or cure, because the liquid plastic resin cools to a temperature below the material's no flow temperature and portions of the liquid plastic become stationary. As the material flows through the mold, a boundary layer of material is formed against the sides of the mold. As the mold continues to fill, the boundary layer continues to thicken, eventually closing off the path of material flow and preventing additional material from flowing into the mold. The plastic resin freezing on the walls of the mold is exacerbated when the molds are cooled, a technique used to reduce the cycle time of each part and increase machine throughput.

There may also be a desire to design a part and the corresponding mold such that the liquid plastic resin flows from areas having the thickest wall thickness towards areas having the thinnest wall thickness. Increasing thickness in certain regions of the mold can ensure that sufficient material flows into areas where strength and thickness is needed. This "thick-to-thin" flow path requirement can make for inefficient use of plastic and result in higher part cost for injection molded part manufacturers because additional material must be molded into parts at locations where the material is unnecessary.

One method to decrease the wall thickness of a part is to increase the pressure of the liquid plastic resin as it is introduced into the mold. By increasing the pressure, the molding machine can continue to force liquid material into the mold before the flow path has closed off. Increasing the pressure, however, has both cost and performance downsides. As the pressure required to mold the component increases, the molding equipment must be strong enough to withstand the additional pressure, which generally equates to being more expensive. A manufacturer may have to purchase new equipment to accommodate these increased pressures. Thus, a decrease in the wall thickness of a given part can result in significant capital expenses to accomplish the manufacturing via conventional injection molding techniques.

Additionally, when the liquid plastic material flows into the injection mold and rapidly freezes, the polymer chains retain the high levels of stress that were present when the polymer was in liquid form. The frozen polymer molecules retain higher levels of flow induced orientation when molecular orientation is locked in the part, resulting in a frozen-in stressed state. These "molded-in" stresses can lead to parts that warp or sink following molding, have reduced mechanical properties, and have reduced resistance to chemical exposure. The reduced mechanical properties are particularly important to control and/or minimize for injection molded parts such as thinwall tubs, living hinge parts, and closures.

In an effort to avoid some of the drawbacks mentioned above, many conventional injection molding operations use shear-thinning plastic material to improve flow of the plastic material into the mold cavity. As the shear-thinning plastic material is injected into the mold cavity, shear forces generated between the plastic material and the mold cavity walls tend to reduce viscosity of the plastic material, thereby allowing the plastic material to flow more freely and easily into the mold cavity. As a result, it is possible to fill thinwall parts fast enough to avoid the material freezing off before the mold is completely filled.

Reduction in viscosity is directly related to the magnitude of shear forces generated between the plastic material and the feed system, and between the plastic material and the mold cavity wall. Thus, manufacturers of these shear-thinning materials and operators of injection molding systems have been driving injection molding pressures higher in an effort to increase shear, thus reducing viscosity. Typically, injection molding systems inject the plastic material in to the mold cavity at melt pressures of 15,000 psi or more. Manufacturers of shear-thinning plastic material teach injection molding operators to inject the plastic material into the mold cavities above a minimum melt pressure. For example, polypropylene resin is typically processed at pressures greater than 6,000 psi (the recommended range from the polypropylene resin manufacturers is typically from greater than 6,000 psi to about 15,000 psi). Resin manufacturers recommend not to exceed the top end of the range. Press manufacturers and processing engineers typically recommend processing shear thinning polymers at the top end of the range, or significantly higher, to achieve maximum potential shear thinning, which is typically greater than 15,000 psi, to extract maximum thinning and better flow properties from the plastic material. Shear thinning thermoplastic polymers generally are processed in the range of over 6,000 psi to about 30,000 psi.

The molds used in injection molding machines must be capable of withstanding these high melt pressures. Moreover, the material forming the mold must have a fatigue limit that can withstand the maximum cyclic stress for the total number of cycles a mold is expected to run over the course of its lifetime. As a result, mold manufacturers typically form the mold from materials having high hardness, such as tool steels, having greater than 30 Rc, and more often greater than 50 Rc. These high hardness materials are durable and equipped to withstand the high clamping pressures required to keep mold components pressed against one another during the plastic injection process. Additionally, these high hardness materials are better able to resist wear from the repeated contact between molding surfaces and polymer flow.

High production injection molding machines (i.e., class 101 and class 102 molding machines) that produce thinwalled consumer products exclusively use molds having a majority of the mold made from the high hardness materials. High production injection molding machines typically produce 500,000 parts or more. Industrial quality production molds must be designed to produce at least 500,000 parts, preferably more than 1,000,000 parts, more preferably more than 5,000,000 parts, and even more preferably more than 10,000,000 parts. These high production injection molding machines have multi cavity molds and complex cooling systems to increase production rates. The high hardness materials described above are more capable of withstanding the repeated high pressure clamping and injection operations than lower hardness materials. However, high hardness materials, such as most tool steels, have relatively low thermal conductivities, generally less than about 20 BTU/HR FT °F, which leads to long cooling times as heat is transferred from the molten plastic material through the high hardness material to a cooling fluid.

In an effort to reduce cycle times, typical high production injection molding machines having molds made of high hardness materials include relatively complex internal cooling systems that circulate cooling fluid within the mold. These cooling systems accelerate cooling of the molded parts, thus allowing the machine to complete more cycles in a given amount of time, which increases production rates and thus the total amount of molded parts produced. In some class 101 molds or class 401 molds, more than 1 or 2 million parts may be produced, these molds are sometimes referred to as "ultra high productivity molds. Class 101 molds that run in 300 ton or larger presses are sometimes referred to as "400 class" molds within the industry.

Another drawback to using high hardness materials for the molds is that high hardness materials, such as tool steels, generally are fairly difficult to machine. As a result, known high throughput injection molds require extensive machining time and expensive machining equipment to form, and expensive and time consuming post-machining steps to relieve stresses and optimize material hardness.

In one type of co-injection, two or more materials are injected into an injection mold cavity, wherein the multiple materials flow into the mold cavity simultaneously, or nearly simultaneously, through one or more gates. The flow of the materials is configured so as to cause the second material to be encapsulated by the first material. A third material would be encapsulated by the second material, and so on. This approach results in the multiple materials being layered within the finished molded part, wherein the first material would be exposed to the outermost surfaces of the part, and the second material would be completely covered by the first material, and a third material would be completely covered by the second material, and so on. It is understood that in the gate area, where the materials enter the mold cavity, a small amount of the second material, and any additional materials, may be exposed to the outer surface. A common practice when co-injecting is to begin introducing the first material slightly ahead of the second material, and additional materials, so as to prevent the additional materials from penetrating the flow front and reaching the surface of the part. It is also a common practice in co-injection to stop the flow of the additional materials just prior to the mold being completely full, as this allows the first material to completely fill the gate area and fully encapsulate the additional materials.

Co-injected materials may instead overlap or abut one another on an injection molded part, without encapsulation of one or more materials in another material. Thus, while co-injection may be used to embed one material within another so as to isolate a surface from contact with the embedded material, co-injection can also provide other means to increase the aesthetic options available to mold manufacturers. For instance, by varying the rate of introduction of one or more of a plurality of differently-colored co-injected materials (*i.e.* materials that have a discernably-different color from one another that is detectable by the human eye, often quantified as delta-E (dE) of at least 1.0, in terms of the CIE 1976 (L*, a*, b*) color space specified by the International Commission on Illumination (Commission Internationale d'Eclairage)), it is possible to achieve swirls or gradients of color within a single part, rather than being limited to abrupt, distinct transitions from one desired color to another within a given molded part.

Co-injection processes generally require a separate injection system for each material to pressurize the material prior to injecting the material in to the mold cavity. The feed system is designed to fluidly transmit each material to a single gate where the materials are merged together. In some co-injection techniques, a second material can be introduced into the mold cavity at a position adjacent to a gate introducing the first material, wherein the second material is sequenced to begin to flow only after the first material has flowed past the second material gate position. This results in the second material penetrating the frozen skin layer of the first material and flowing up the liquid center portion of the material flow.

In a conventional, variable pressure co-injection system, a prevalent manufacturing challenge is maintaining synchronized flow front velocities of the materials introduced to the mold cavity (i.e., it is desirable, yet difficult, to maintain equal relative velocities between the flow front of each material being co-injected, so as to maintain a consistent distribution of materials in the mold cavity, with each of the materials, regardless of viscosity, moving at the same rate). Even with computer-controlled operation of barrels supplying individual materials, with sensors detecting and communicating with controllers the rate of rotation of the screws of the injection molding machine so as to control velocities of the co-injected materials, an iterative procedure is required to achieve and maintain synchronized flow rates of materials during the molding process and avoid unwanted inconsistencies in the distribution of the materials in the parts to be injection molded.

Another drawback of conventional co-injection processes is that, as compared to single-material injection molding, variable pressure co-injection has required a part thickness of at least 1mm to avoid an inner layer from bursting through an outer layer (0.5 mm thickness for each layer into which another material is co-injected). In other words, to achieve sufficient flow of a second material that is to be co-injected with a first material, the thickness of the first material in conventional co-injection systems has to be at least 0.5mm. If a three material co-injection is desired, the combined thickness of the first and second materials would need to be at least 1.0mm.

JP2004 050622 discusses a molding method which is said to be capable of securing a sufficient thickness of a core layer while having a wide selective width for the class of a resin. The molding method is said to involved a resin becoming a skin layer through the same sprue and a resin becoming a core layer continuously injected into the cavity.

US 5 800 751 discusses a method for injecting a plastic material into a mold cavity to precisely fill the mold cavity under low pressure and to avoid packing the mold cavity with plastic material. The plastic material is said to be injected into the mold cavity at a rate sufficient to maintain an unbroken melt front and to avoid any spraying or splashing of the plastic material within the mold cavity. By filling the mold cavity exactly, it is said that prior art problems associated with packing, such as warping and flash, are addressed

GB 2059 327 discusses a process for the production of industrial parts of synthetic material comprising a portion of a rigid material surmounted by a portion of a flexible material, and in particular industrial parts serving as a means for making a seal between different parts of heating or air-conditioning equipment.

BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

FIG. 1 illustrates a schematic view of an injection molding machine constructed according to the disclosure;

FIG. 2 illustrates one embodiment of a thin-walled part formed in the injection molding machine of FIG. 1;

FIG. 3 is a cavity pressure vs. time graph for a mold cavity in a mold of the injection molding machine of FIG. 1;

FIG. 4 is a cross-sectional view of one embodiment of a mold assembly of the injection molding machine of FIG. 1;

FIG. 5 is a perspective view of a feed system;

FIGS. 6A and 6B are schematic illustrations of various feed systems;

FIG. 7 is a cross-sectional view of a molding assembly of the present disclosure including a multi-cavity mold and a co-injection manifold;

FIG. 8 is a perspective view, partially broken away, of a cap of a consumer product that is co-injected in a manner according to the present disclosure and having a core material that is reinforced in a connecting region of the cap adjacent the end of the cap;

FIG. 9 is a cross-sectional view of the cap of FIG. 8, taken along lines 9-9 of FIG. 8

FIGS. 10a-10d are sequential cross-sectional, time-lapsed views illustrating a mold cavity and a gate of a molding assembly of the present disclosure, during co-injection of the cap of FIGS. 8 and 9;

FIG. 11 is a cross-sectional view of a cap similar to the cap of FIGS. 8 and 9, but having a reinforced region in an area spaced farther apart from the end of the cap than the reinforced connecting region adjacent the end of the cap of FIGS. 8 and 9;

FIGS. 12a-12d are sequential cross-sectional, time-lapsed views illustrating a mold cavity and a gate of a molding assembly of the present disclosure, during co-injection of the cap of FIG. 11;

FIG. 13 is a perspective view of a two-component toggle cap with a dynamic component that is co-injected in a manner according to the present disclosure;

FIG. 14 is a cross-sectional view of the main cap component of the two-component toggle cap of FIG. 13;

FIG. 15 is a plan view of the dynamic component of the two-component toggle cap of FIG. 13; and

FIGS. 16a-16c are sequential cross-sectional, time-lapsed views illustrating a mold cavity and a gate of a molding assembly of the present disclosure, during co-injection of the dynamic component of the two-component toggle cap of FIGS. 11 and 13.

DETAILED DESCRIPTION

Embodiments of the present invention generally relate to systems and methods of producing products by injection molding and more specifically to systems and methods of producing products by low constant pressure co-injection molding.
The term "low pressure" as used herein with respect to melt pressure of a thermoplastic material, means melt pressures in a vicinity of a nozzle of an injection molding machine of approximately 6000 psi and lower.
The term "substantially constant pressure" as used herein with respect to a melt pressure of a thermoplastic material, means that deviations from a baseline melt pressure do not produce meaningful changes in physical properties of the thermoplastic material. For example, "substantially constant pressure' includes, but is not limited to, pressure variations for which viscosity of the melted thermoplastic material does not meaningfully change. The term "substantially constant" in this respect includes deviations of approximately 30% from a baseline melt pressure. For example, the term "a substantially constant pressure of approximately 4600 psi" includes pressure fluctuations within the range of about 6000 psi (30% above 4600 psi) to about 3200 psi (30% below 4600 psi). A melt pressure is considered substantially constant as long as the melt pressure fluctuates no more than 30% from the recited pressure.
The use of constant pressure in a co-injection process has several advantages over a conventional variable pressure process. In a conventional variable pressure process, it is difficult to achieve a constant flow rate of a first material in relation to a second material, or a third material, and so on. This is difficult since the material flow is controlled by two independent injection systems, and as the material encounters differing levels of resistance to flow the pressure will increase or decrease. This change in pressure results in an inconsistent flow rate between the two material flows, and thus the layers of the materials will have varied thicknesses. As a result, it is necessary to employ complicated algorithms, expensive equipment to control the flow as evenly as possible. Furthermore, it is necessary to run numerous trials, and adjust the process settings after each trial to achieve the desired flow consistency. This iterative process is very time consuming and expensive. Also, this iterative process must be done each time a part design changes, or if a new material is used for one or more of the layers.
In the case of constant pressure, the flow rate is inherently more stable, since the pressure is constant and, to the extent pressure adjustments are necessary to maintain a desired pressure, a control system is adjusted real-time to maintain this constant pressure on both injection systems. Thus, if both injection systems (i.e., the injection system for each of two materials that are co-injected with one another into a mold cavity) are at equal pressure, then the flow rate will also be equal in to the mold cavity. This provides a more consistent layer thickness, and eliminates the need for highly complex control algorithms, expensive equipment, and time consuming iterative processes to define acceptable process settings to achieve the desired layer thickness. This simpler, less-expensive, faster process makes it possible to employ co-injection for applications that previously were not feasible mainly for economic reasons. Some examples are:

It is possible to encapsulate lower cost recycled resin in the center or core of a molded component and achieve savings in the cost of the finished part. Previously, the cost of the equipment would have resulted in higher cost of the finished part. Encapsulation of recyclable (including recycled resins such as post-consumer recyclable (PCR) and post-industrial recyclable (PIR), referred to herein individually or collectively as PCR and PIR's for convenience) materials is advantageous in that it not only isolates those materials from any undesirable direct contact with consumable materials that might be contained in co-injected parts, but it also masks the PCR and PIR materials from view. For instance, when PCR's and PIR's are re-ground for use in injection molding processes, it is typical to add a dark colorant, such as black, to avoid visual inconsistencies in finished parts. However, having exposed dark colored or black PCR and PIR material on a part may not be pleasing to the eye of a consumer, so encapsulating that material in a skin layer of material that is of a more pleasing color, is advantageous and the ability to do so in a cost-effective manner according to the process and system of the present disclosure will encourage greater use of PCR's and PIR's on the part of manufacturers of injection molded products, thereby resulting in more environmentally friendly production.

It is possible, such as by varying the relative pressures at which two or more co-injected materials are delivered to a mold cavity, to achieve localized variations in relative concentration of co-injected materials. This permits, for example, strengthening of a connecting region of a cap for a consumer product by reinforcing that connecting region with a greater thickness of a stronger, perhaps more costly, molding material in the co-injection, while other regions of that same cap can be co-injected with a lower concentration of the stronger material to save costs.

It is possible to mold a decorative multiple color thin wall part. Parts having an overall wall thickness as thin as 0.5mm can be molded with one or more discrete inner layers. Previously, the use of multi-shot molding was used, which required complicated equipment and molds. Furthermore, when injection molding at high pressure, conventional high-production (e.g., Class 101 and 102) molding processes were only capable to mold a single material in a thin wall part. A multiple layer structure would require each layer to be about 0.5mm or more in thickness to avoid the second (core) material from surging past or bursting through the first (skin) material. Thus, constant pressure co-injection is especially advantageous when expensive materials are used, such as an EVOH barrier layer, since the EVOH material is much more expensive than a general purpose resin such as PP. The EVOH could be as thin as 0.1mm in a constant pressure co-injection system, rather than about 0.5mm in a multiple shot system, without the undesired bursting of the second material through the first material.

Other co-injection scenarios that may be achieved with the low constant pressure molding system and process of the present disclosure include the co-injection of two or more materials that overlap, but do not include full encapsulation of one material in another. Examples of multi-material configurations of products that could be co-injected consistent with these scenarios using the system and method of the present disclosure are illustrated and described in US Publication Nos. 2005/0170113 A1 and 2009/0194915 A1.

A further alternative within the scope of the present disclosure is for co-injected materials to abut one another, but not overlap, in a finished molded part. Examples of multi-material configurations of products that could be co-injected consistent with these scenarios using the system and method of the present disclosure are illustrated and described in US Publication No. 2005/0170114 A1.

As resource conservation initiatives increase acceptance and demand for the use of sustainable materials (i.e., materials derivable from renewable resources) (such as polylactic acid (PLA), starch, post-consumer recyclables (PCR's), and post-industrial recyclables (PIR's)) in injection molded products, low constant pressure co-injection according to the present disclosure presents an attractive solution to enable use of such materials in a growing number of molded products, despite their inferior physical properties, such as brittleness of PLA, water sensitivity of starch, and odor and discontinuities in PCR's and PIR's. Various polymer materials that do not perform well when exposed to moisture, but that could be used as a core material in injection molded parts if isolated from moisture, include, but are not limited to, Poly(vinyl alcohol) (PVOH), Poly(ethylene-co-vinyl alcohol) (EVOH), Poly(vinyl pyrrolidone) (PVP), Poly(oxazoline), Poly(ethylene glycol) also known as poly(oxymethylene), Poly(acrylic acid), Polyamides, such as poly(hexamethlyne adipamide), hydrophilically modified polyesters, Thermoplastic Starches (TPS), and unmodified starches and hybrid blends. An obstacle to increased use of materials such as PLA, starch, PCR's, and PIR's in the realm of consumer products in general, and personal hygiene products in particular, was concern regarding exposure of such materials to skin-contacting surfaces or, with respect to consumable fluids or gel products contained in molded packaging, exposure and potential leaching to those consumable products. Another has been the unsightly nature of PCR's, which, as discussed above, are frequently mixed with black or dark-colored colorants to hide variations in consistency or color. While co-injection has been known as a manner of embedding one material within another to isolate the embedded material from contact with exposed surfaces, as described above, conventional co-injection techniques required a relatively thick wall for the outer-most material, on the order of at least 0.5mm, in order to achieve sufficient flow of the material to be embedded and avoid the core material from surging past or bursting through the outer-most material. Polyolefins (including polypropylene and polyethylene) would also be suitable materials for use as the core of a co-injected product component.

By employing a mold made of a material having a high thermal conductivity, molten material may be introduced into such a mold at a lower pressure. There is also more control over the relative velocities of the materials being introduced, facilitating a synchronized flow front. When these materials are co-injected at lower pressure, into molds made of materials having high thermal conductivity, there is less of a need to provide such a thick outer material to achieve flow of the second material relative to the first. As a result, PLA, starch, PCR's and PIR's may be embedded in a thin layer (i.e., less than 0.5mm) virgin molding material such as Ethylene Vinyl Alcohol (EVOH) or polypropylene, having superior physical properties, with the PLA, starch, and/or PCR layer(s) kept isolated from exposed surfaces of the molded part and obscured from view. As indicated above, the EVOH or PP layer may be as thin as 0.1mm. Thus, multi-layer co-injected parts may be achieved having overall thicknesses even less than 0.5mm.

In various embodiments of co-injection, as disclosed herein, a molded part can also be formed having foamed plastic in its core. Foamed core parts can be useful for relatively thicker parts. In some embodiments, a foamed inner layer can also be coated in various ways, to form a smooth outside layer. As a result, embodiment having a foamed core and/or a foamed inner layer can offer savings in materials and/or costs, when compared with conventional parts made with a unitary molded structure.

Moreover, co-injection at low constant pressure according to the present disclosure affords an increased opportunity to cost-effectively manufacture consumer products having dynamic features, such as a disc top cap, also referred to in the art as a toggle cap, or a flip top cap, that are recyclable. The components of such caps are typically manufactured of dissimilar materials to one another, so as to avoid the tendency for the movable component to stick to the stationary component. For instance, a cylindrical outer portion of a disc top cap having a thread on an interior wall thereof for mating with a top of a shampoo bottle is typically made of one material, such as polypropylene, and the toggling portion used to selectively open and close the bottle is typically made of a dissimilar material, such as polyethylene, or vice-versa. If both components of such a cap were made of polypropylene, or both components were made of polyethylene, the mating portions of the components would tend to stick to one another due to cohesion, interfering with the ability to open or close the bottle and detrimentally affecting consumer acceptance of the product. However, because recycling a product becomes more difficult if the product is not homogeneous, the use of such dissimilar materials adversely affects recyclability.

By utilizing low constant pressure co-injection of the present disclosure, such multicomponent, dynamic-featured caps can be molded such that contacting surfaces are dissimilar, but the core of one of the components, such as the toggling portion, is molded of the same material as the other component, thereby avoiding cohesion. The low constant pressure co-injection of the present disclosure permits the skin layer of the co-injected toggling portion to have a thin wall without substantial risk of the core material bursting through the skin material. As such, the cylindrical outer portion may be made of polypropylene, and the core material of the toggling portion may also be polypropylene, co-injected in a skin layer as thin as 0.1 mm of a dissimilar material such as polyethylene. The end result is a two-component cap having only a very small percentage that is not polypropylene. The levels of polyethylene constituting the skin layer of the toggle portion, while sufficient to avoid the cohesion problem, are not significant enough to diminish recyclability.

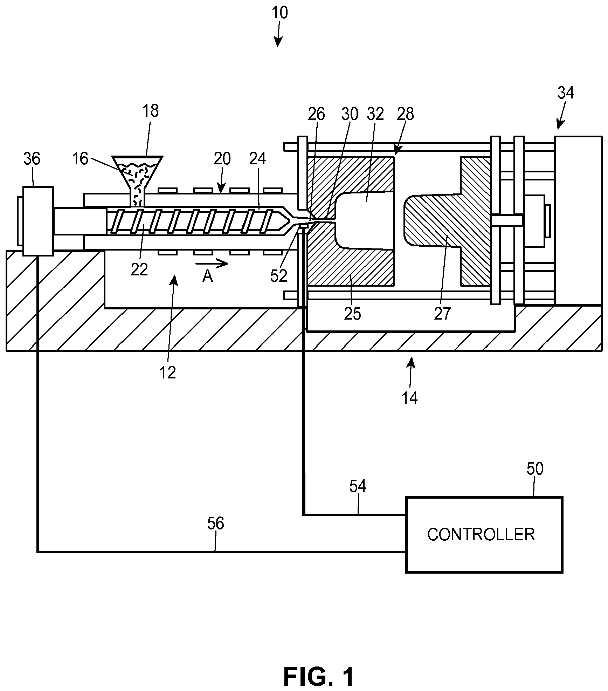

Referring to the figures in detail, FIG. 1 illustrates an exemplary low constant pressure injection molding apparatus 10 for producing thin-walled parts in high volumes (e.g., a class 101 or 102 injection mold, or an "ultra high productivity mold"). The injection molding apparatus 10 generally includes an injection system 12 and a clamping system 14. A thermoplastic material may be introduced to the injection system 12 in the form of thermoplastic pellets 16. The thermoplastic pellets 16 may be placed into a hopper 18, which feeds the thermoplastic pellets 16 into a heated barrel 20 of the injection system 12. The thermoplastic pellets 16, after being fed into the heated barrel 20, may be driven to the end of the heated barrel 20 by a reciprocating screw 22. The heating of the heated barrel 20 and the compression of the thermoplastic pellets 16 by the reciprocating screw 22 causes the thermoplastic pellets 16 to melt, forming a molten thermoplastic material 24. The molten thermoplastic material is typically processed at a temperature of about 130°C to about 410°C.

The reciprocating screw 22 forces the molten thermoplastic material 24, toward a nozzle 26 to form a shot of thermoplastic material, which will be injected into a mold cavity 32 of a mold 28. The molten thermoplastic material 24 may be injected through a gate 30, which directs the flow of the molten thermoplastic material 24 to the mold cavity 32. The mold cavity 32 is formed between first and second mold parts 25, 27 of the mold 28 and the first and second mold parts 25, 27 are held together under pressure by a press or clamping unit 34. The press or clamping unit 34 applies a clamping force that needs to be greater than the force exerted by the injection pressure acting to separate the two mold halves to hold the first and second mold parts 25, 27 together while the molten thermoplastic material 24 is injected into the mold cavity 32. To support these clamping forces, the clamping system 14 may include a mold frame and a mold base, the mold frame and the mold base being formed from a material having a surface hardness of more than about 165 BHN and preferably less than about 260 BHN, although materials having surface hardness BHN values of greater than 260 may be used as long as the material is easily machineable, as discussed further below.

Once the shot of molten thermoplastic material 24 is injected into the mold cavity 32, the reciprocating screw 22 stops traveling forward. The molten thermoplastic material 24 takes the form of the mold cavity 32 and the molten thermoplastic material 24 cools inside the mold 28 until the thermoplastic material 24 solidifies. Once the thermoplastic material 24 has solidified, the press 34 releases the first and second mold parts 25, 27, the first and second mold parts 25, 27 are separated from one another, and the finished part may be ejected from the mold 28. The mold 28 may include a plurality of mold cavities 32 to increase overall production rates. The shapes of the cavities of the plurality of mold cavities may be identical, similar or different from each other. (The latter may be considered a family of mold cavities).

A controller 50 is communicatively connected with a sensor 52 and a screw control 36. The controller 50 may include a microprocessor, a memory, and one or more communication links. The controller 50 may be connected to the sensor 52 and the screw control 36 via wired connections 54, 56, respectively. In other embodiments, the controller 50 may be connected to the sensor 52 and screw control 56 via a wireless connection, a mechanical connection, a hydraulic connection, a pneumatic connection, or any other type of communication connection known to those having ordinary skill in the art that will allow the controller 50 to communicate with both the sensor 52 and the screw control 36.

In the embodiment of FIG. 1, the sensor 52 is a pressure sensor that measures (directly or indirectly) melt pressure of the molten thermoplastic material 24 in the nozzle 26. The sensor 52 generates an electrical signal that is transmitted to the controller 50. The controller 50 then commands the screw control 36 to advance the screw 22 at a rate that maintains a substantially constant melt pressure of the molten thermoplastic material 24 in the nozzle 26. While the sensor 52 may directly measure the melt pressure, the sensor 52 may measure other characteristics of the molten thermoplastic material 24, such as temperature, viscosity, flow rate, etc, that are indicative of melt pressure. Likewise, the sensor 52 need not be located directly in the nozzle 26, but rather the sensor 52 may be located at any location within the injection system 12 or mold 28 that is fluidly connected with the nozzle 26. The sensor 52 need not be in direct contact with the injected fluid and may alternatively be in dynamic communication with the fluid and able to sense the pressure of the fluid and/or other fluid characteristics. If the sensor 52 is not located within the nozzle 26, appropriate correction factors may be applied to the measured characteristic to calculate the melt pressure in the nozzle 26. In yet other embodiments, the sensor 52 need not be disposed at a location which is fluidly connected with the nozzle. Rather, the sensor could measure clamping force generated by the clamping system 14 at a mold parting line between the first and second mold parts 25, 27. In one aspect the controller 50 may maintain the pressure according to the input from sensor 52.

Although an active, closed loop controller 50 is illustrated in Fig. 1, other pressure regulating devices may be used instead of the closed loop controller 50. For example, a pressure regulating valve (not shown) or a pressure relief valve (not shown) may replace the controller 50 to regulate the melt pressure of the molten thermoplastic material 24. More specifically, the pressure regulating valve and pressure relief valve can prevent overpressurization of the mold 28. Another alternative mechanism for preventing overpressurization of the mold 28 is an alarm that is activated when an overpressurization condition is detected.

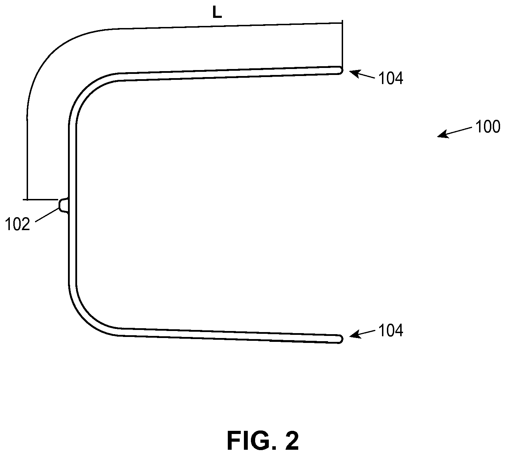

Turning now to Fig. 2, an example molded part 100 is illustrated. The molded part 100 is a thin-walled part. Molded parts are generally considered to be thin-walled when a length of a flow channel L divided by a thickness of the flow channel T is greater than 100 (i.e., L/T > 100). In some injection molding industries, thin-walled parts may be defined as parts having an L/T > 200, or an L/T > 250. The length of the flow channel L is measured from a gate 102 to a flow channel end 104. Thin-walled parts are especially prevalent in the consumer products industry and healthcare or medical supplies industry.

Molded parts are generally considered to be thin-walled when a length of a flow channel L divided by a thickness of the flow channel T is greater than 100 (i.e., L/T > 100). For mold cavities having a more complicated geometry, the L/T ratio may be calculated by integrating the T dimension over the length of the mold cavity 32 from a gate 102 to the end of the mold cavity 32, and determining the longest length of flow from the gate 102 to the end of the mold cavity 32. The L/T ratio can then be determined by dividing the longest length of flow by the average part thickness. In the case where a mold cavity 32 has more than one gate 30, the L/T ratio is determined by integrating L and T for the portion of the mold cavity 32 filled by each individual gate and the overall L/T ratio for a given mold cavity is the highest L/T ratio that is calculated for any of the gates.

Thin-walled parts present certain obstacles in injection molding. For example, the thinness of the flow channel tends to cool the molten thermoplastic material before the material reaches the flow channel end 104. When this happens, the thermoplastic material freezes off and no longer flows, which results in an incomplete part. To overcome this problem, traditional injection molding machines inject the molten thermoplastic material into the mold at very high pressures, typically greater than 15,000 psi, so that the molten thermoplastic material rapidly fills the mold cavity before having a chance to cool and freeze off. This is one reason that manufacturers of the thermoplastic materials teach injecting at very high pressures. Another reason traditional injection molding machines inject molten plastic into the mold at high pressures is the increased shear, which increases flow characteristics, as discussed above. These very high injection pressures require the use of very hard materials to form the mold 28 and the feed system.

Traditional injection molding machines use molds made of tool steels or other hard materials to make the mold. While these tool steels are robust enough to withstand the very high injection pressures, tool steels are relatively poor thermal conductors. As a result, very complex cooling systems are machined into the molds to enhance cooling times when the mold cavity is filled, which reduces cycle times and increases productivity of the mold. However, these very complex cooling systems add great time and expense to the mold making process.

The inventors have discovered that shear-thinning thermoplastics (even minimally shear-thinning thermoplastics) may be injected into the mold 28 at low, substantially constant, pressure without any significant adverse affects. Examples of these materials include but are not limited to polymers and copolymers comprised of, polypropylene, polyethylene, thermoplastic elastomers, polyester, polyethylene furanoate (PEF), polystyrene, polycarbonate, poly(acrylonitrile-butadiene-styrene), poly(latic acid), polyhydroxyalkanoate, polyamides, polyacetals, ethylene-alpha olefin rubbers, and styrene-butadiene-stryene block copolymers. In fact, parts molded at low, substantially constant, pressures exhibit some superior properties as compared to the same part molded at a conventional high pressure. This discovery directly contradicts conventional wisdom within the industry that teaches higher injection pressures are better. Without being bound by theory, it is believed that injecting the molten thermoplastic material into the mold 28 at low, substantially constant, pressures creates a continuous flow front of thermoplastic material that advances through the mold from a gate to a farthest part of the mold cavity. By maintaining a low level of shear, the thermoplastic material remains liquid and flowable at much lower temperatures and pressures than is otherwise believed to be possible in conventional high pressure injection molding systems.

Due to the aforementioned thickness requirements employed when using conventional co-injection, i.e. a minimum first material thickness of 0.5mm so that a second material may be co-injected therein, mass production of co-injection of parts having a high L/T, i.e. on the order of greater than 100, wherein a first material has a second, distinct material embedded therein, was not considered economically feasible. With a substantially constant, low pressure process of the present disclosure, the shear effects that necessitated a thicker first material wall to obtain acceptable flow of a second material therein are overcome. Additionally, the problems associated with controlling relative flow velocities of the co-injected materials are significantly diminished. Co-injection of overlapping or abutting materials, without encapsulation of one or more material inside another, are also significantly more cost-effective and predictable, without as much need for tuning or iteratively controlling relative flow rates to achieve desired and repeatable results.

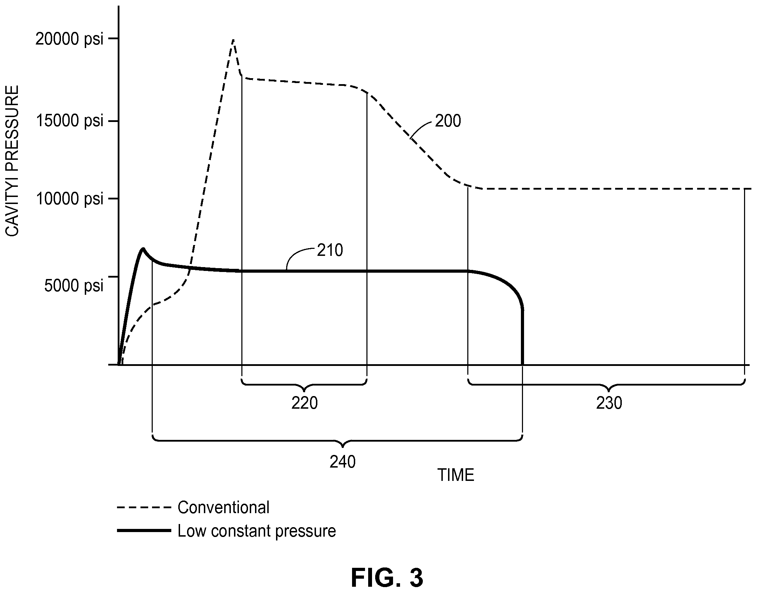

Turning now to Fig. 3, a typical pressure-time curve for a conventional high pressure injection molding process is illustrated by the dashed line 200. By contrast, a pressure-time curve for the disclosed low constant pressure injection molding machine is illustrated by the solid line 210.

In the conventional case, melt pressure is rapidly increased to well over 15,000 psi and then held at a relatively high pressure, more than 15,000 psi, for a first period of time 220. The first period of time 220 is the fill time in which molten plastic material flows into the mold cavity. Thereafter, the melt pressure is decreased and held at a lower, but still relatively high pressure, 10,000 psi or more, for a second period of time 230. The second period of time 230 is a packing time in which the melt pressure is maintained to ensure that all gaps in the mold cavity are back filled. The mold cavity in a conventional high pressure injection molding system is filled from the end of the flow channel back to towards the gate. As a result, plastic in various stages of solidification are packed upon one another, which may cause inconsistencies in the finished product, as discussed above. Moreover, the conventional packing of plastic in various stages of solidification results in some non-ideal material properties, for example, molded-in stresses, sink, non-optimal optical properties, etc.

The constant low pressure injection molding system, on the other hand, injects the molten plastic material into the mold cavity at a substantially constant low pressure for a single time period 240. The injection pressure is less than 6,000 psi. By using a substantially constant low pressure, the molten thermoplastic material maintains a continuous melt front that advances through the flow channel from the gate towards the end of the flow channel. Thus, the plastic material remains relatively uniform at any point along the flow channel, which results in a more uniform and consistent finished product. By filling the mold with a relatively uniform plastic material, the finished molded parts form crystalline structures that have better mechanical and/or better optical properties than conventionally molded parts. Amorphous polymers may also form structures having superior mechanical and/or optical properties. Moreover, the skin layers of parts molded at low constant pressures exhibit different characteristics than skin layers of conventionally molded parts. As a result, the skin layers of parts molded under low constant pressure can have better optical properties than skin layers of conventionally molded parts.

By maintaining a substantially constant and low (i.e. less than 6000 psi) melt pressure within the nozzle, more machineable materials may be used to form the mold 28. For example, the mold 28 illustrated in Fig. 1 may be formed of a material having a milling machining index of greater than 100% (such as 100-1000%, 100-900%, 100-800%, 100-700%, 100-600%, 100-500%, 100-400%, 100-300%, 100-250%, 100-225%, 100-200%, 100-180%, 100-160%, 100-150%, 100-140%, 100-130%, 100-120%, 100-110%, 120-250%, 120-225%, 120-200%, 120-180%, 120-160%, 120-150%, 120-140%, 120-130%, 140-400%, 150-300%, 160-250%, or 180-225%, or any other range formed by any of these values for percentage), a drilling machining index of greater than 100%, (such as 100-1000%, 100-900%, 100-800%, 100-700%, 100-600%, 100-500%, 100-400%, 100-300%, 100-250%, 100-225%, 100-200%, 100-180%, 100-160%, 100-150%, 100-140%, 100-130%, 100-120%, 100-110%, 120-250%, 120-225%, 120-200%, 120-180%, 120-160%, 120-150%, 120-140%, 120-130%, 140-400%, 150-300%, 160-250%, or 180-225%, or any other range formed by any of these values for percentage), a drilling machining index of greater than 100% (such as 100-1000%, 100-900%, 100-800%, 100-700%, 100-600%, 100-500%, 100-400%, 100-300%, 100-250%, 100-225%, 100-200%, 100-180%, 100-160%, 100-150%, 100-140%, 100-130%, 100-120%, 100-110%, 120-250%, 120-225%, 120-200%, 120-180%, 120-160%, 120-150%, 120-140%, 120-130%, 140-400%, 150-300%, 160-250%, or 180-225%, or any other range formed by any of these values for percentage), a wire EDM machining index of greater than 100% (such as 100-1000%, 100-900%, 100-800%, 100-700%, 100-600%, 100-500%, 100-400%, 100-300%, 100-250%, 100-225%, 100-200%, 100-180%, 100-160%, 100-150%, 100-140%, 100-130%, 100-120%, 100-110%, 120-250%, 120-225%, 120-200%, 120-180%, 120-160%, 120-150%, 120-140%, 120-130%, 140-400%, 150-300%, 160-250%, or 180-225%, or any other range formed by any of these values for percentage), a graphite sinker EDM machining index of greater than 200% (such as 200-1000%, 200-900%, 200-800%, 200-700%, 200-600%, 200-500%, 200-400%, 200-300%, 200-250%, 300-900%, 300-800%, 300-700%, 300-600%, 300-500%, 400-800%, 400-700%, 400-600%, 400-500%, or any other range formed by any of these values for percentage), or a copper sinker EDM machining index of greater than 150% (such as 150-1000%, 150-900%, 150-800%, 150-700%, 150-600%, 150-500%, 150-400%, 150-300%, 150-250%, 150-225%, 150-200%, 150-175%, 250-800%, 250-700%, 250-600%, 250-500%, 250-400%, 250-300%, or any other range formed by any of these values for percentage). The machining indexes are based upon milling, drilling, wire EDM, and sinker EDM tests of various materials. The test methods for determining the machining indices are explained in more detail below. Examples of machining indexes for a sample of materials are compiled below in Table 1.

# EP 2 817 137 B1

Table 1

| Material | | Machining Technology | | | | | | | | | | |
|---|---|---|---|---|---|---|---|---|---|---|---|---|
| | | Milling | | Drilling | | Wire EDM | | Sinker EDM-Graphite | | | Sinker EDM-Copper | | |
| | | Spindle Load | Index % | Spindle Load | Index % | time | % | time | % | | time | % | |
| | 1117* | 0.72 | 100% | 0.31 | 100% | 9:44 | 100% | 1:46:06 | 100% | | 0:34:15 | 100% | |
| | 6061 Al | 0.55 | 131% | 0.21 | 148% | 4:52 | 200% | 0:13:04 | 812% | | 0:21:15 | 161% | |
| | 7075 Al | 0.54 | 133% | 0.23 | 135% | 4:52 | 200% | 0:11:00 | 965% | | 0:18:41 | 183% | |
| | Alcoa QC-10 Al | 0.57 | 126% | 0.23 | 135% | 4:52 | 200% | 0:12:12 | 870% | | 0:17:07 | 200% | |
| | 4140 | 0.91 | 79% | 0.37 | 84% | 9:17 | 105% | 1:16:00 | 140% | | 0:26:53 | 127% | |
| | 420 SS | 1.40 | 51% | 0.46 | 67% | 9:39 | 101% | 1:17:08 | 138% | | 0:27:30 | 125% | |
| | A2 | 0.93 | 77% | 0.47 | 66% | 8:52 | 110% | 1:12:50 | 146% | | 0:24:59 | 137% | |
| | S7 | 1.02 | 71% | 0.44 | 70% | 9:21 | 104% | 1:13:16 | 145% | | 0:25:53 | 132% | |
| | P20 | 0.92 | 78% | 0.41 | 76% | 8:38 | 113% | 1:10:41 | 150% | | 0:24:11 | 142% | |
| | PX5 | 0.93 | 77% | 0.36 | 86% | 8:32 | 114% | 1:29:00 | 119% | | 0:27:46 | 123% | |
| | Moldmax HH | 0.81 | 89% | 0.33 | 94% | 6:06 | 160% | 8:01:42 | 22% | 1 | 0:32:36 | 105% | 3 |
| | Ampcoloy 944 | 0.51 | 141% | 0.21 | 148% | 6:21 | 153% | 3:40:10 | 48% | 2 | 0:20:51 | 164% | 4 |
| | | | | | | | | | | | | | |
| | | | | | | | | | | | | | |
| | | | | | | | | | | | | | |
| *1117 is the benchmark material for this test. Published data references 1212 carbon steel as the benchmark material. 1212 was not readily available. Of the published data, 1117 was the closest in composition and machining index percentage (91%). | | | | | | 1 Significant graphite electrode wear: ~ 20%  2 graphite electrode wear: ~ 15% | | | | | 3Cu electrode wear:~15%  4 Cu electrode wear: ~ 3% | | |

Using easily machineable materials to form the mold 28 results in greatly decreased manufacturing time and thus, a decrease in manufacturing costs. Moreover, these machineable materials generally have better thermal conductivity than tool steels, which increases cooling efficiency and decreases the need for complex cooling systems.

When forming the mold 28 of these easily machineable materials, it is also advantageous to select easily machineable materials having good thermal conductivity properties. Materials having average thermal conductivities of more than 30 BTU/HR FT °F are applied in accordance with the current invention. In particular, these materials can have thermal conductivities (measured in BTU/HR FT °F) of 30-200, 30-180, 30-160, 30-140, 30-120, 30-100, 30-80, 30-60, 30-40, 40-200, 60-200, 80-200, 100-200, 120-200, 140-200, 160-200, 180-200, 40-200, 40-180, 40-160, 40-140, 40-120, 40-100, 40-80, 40-60, 50-140, 60-140, 70-140, 80-140, 90-140, 100-140, 110-140, 120-140, 50-130, 50-120, 50-110, 50-100, 50-90, 50-80, 50-70, 50-60, 60-130, 70-130, 80-130, 90-130, 100-130, 110-130, 120-130, 60-120, 60-110, 60-100, 60-90, 60-80, 60-70, 70-130, 70-120, 70-110, 70-100, 70-90, 70-80, 70-110, 70-100, 70-90, 70-80, 80-120, 80-110, 80-100, or 80-90, or any other range formed by any of these values for thermal conductivity. For example easily machineable materials having good thermal conductivities include, but are not limited to, QC-10 (available from Alco), Alumold 500 (available from Alcan), Duramold-5 (available from Vista Metals, Corp.) and Hokotol (available from Aleris). Materials with good thermal conductivity more efficiently transmit heat from the thermoplastic material out of the mold. As a result, more simple cooling systems may be used. Additionally, non-naturally balanced feed systems are also possible for use in the constant low pressure injection molding machines described herein.

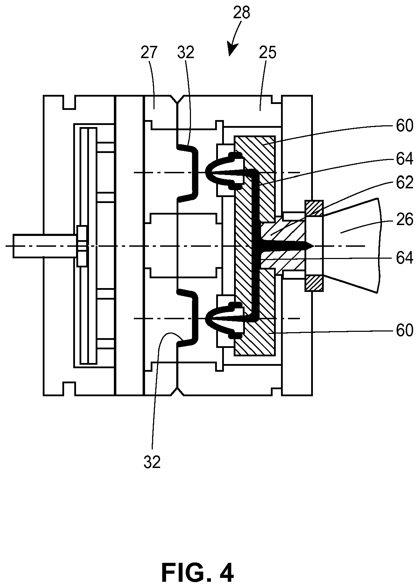

One example of a multi-cavity mold assembly 28 is illustrated in FIGS. 4A and 4B. Multi-cavity molds generally include a feed manifold 60 that directs molten thermoplastic material from the nozzle 26 to the individual mold cavities 32. The feed manifold 60 includes a sprue 62, which directs the molten thermoplastic material into one or more runners or feed channels 64. Each runner may feed multiple mold cavities 32. In many high capacity injection molding machines, the runners are heated to enhance flowability of the molten thermoplastic material. Because viscosity of the molten thermoplastic material is very sensitive to shear and pressure variations at high pressures (e.g., above 10,000 psi), conventional feed manifolds are naturally balanced to maintain uniform viscosity. Naturally balanced feed manifolds are manifolds in which molten thermoplastic material travels an equal distance from the sprue to any mold cavity. Moreover, the cross-sectional shapes of each flow channel are identical, the number and type of turns are identical, and the temperatures of each flow channel are identical. Naturally balanced feed manifolds allow the mold cavities to be filled simultaneously so that each molded part has identical processing conditions and material properties.

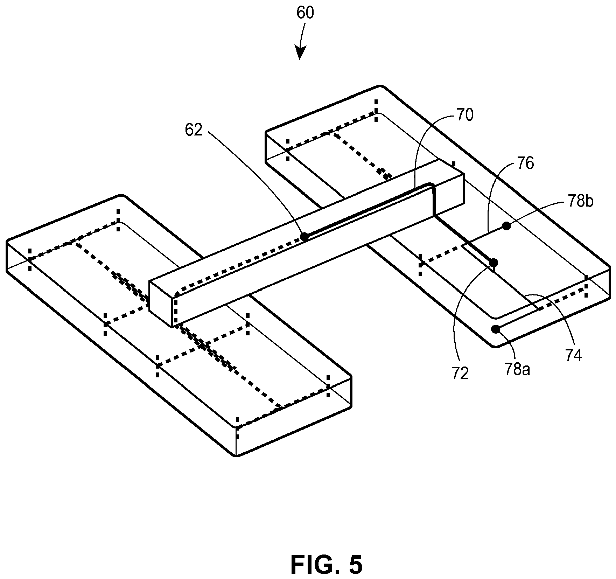

FIG. 5 illustrates an example of a naturally balanced feed manifold 60. The naturally balanced feed manifold 60 includes a first flow path 70 from the sprue 62 to a first junction 72 where the first flow path 70 splits into second and third flow paths 74, 76, the second flow path terminating at a second gate 78a and the third flow path 76 terminating at a third gate 78b each gate serving an individual mold cavity (not shown in FIG. 5). Molten thermoplastic material flowing from the sprue 62 to either the second gate 78a or the third gate 78b travels the same distance, experiences the same temperatures, and is subjected to the same cross-sectional flow areas. As a result, each mold cavity is filled simultaneously with molten thermoplastic material having identical physical properties.

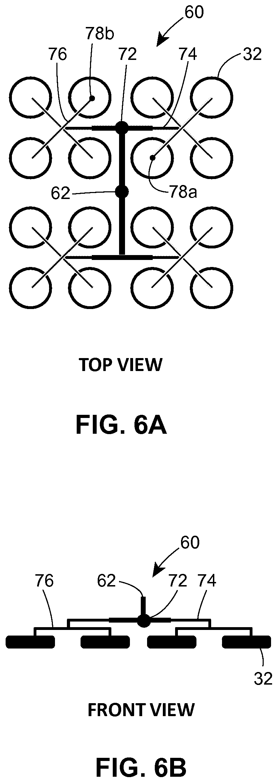

FIG. 6A illustrates the naturally balanced manifold 60 schematically. Each flow path 74, 76 has identical characteristics at identical locations along the flow path. For example, after the junction 72, each flow path narrows at the same distance. Moreover, each flow path serves an identical number of mold cavities 32. Naturally balanced flow manifolds 60 are critical to high pressure injection molding machines to maintain identical plastic flow properties and to ensure uniform parts.

FIG. 6B, on the other hand, illustrates an artificially balanced manifold 160. The low constant pressure injection molding machine disclosed herein allows artificially balanced manifolds 160, and even unbalanced manifolds (not shown), to be used because thermoplastic materials injected at low constant pressure are not as sensitive to pressure differences or shear differences due to flow channel characteristic differences. In other words, the thermoplastic materials injected at low constant pressure retain nearly identical material and flow properties regardless of differences in flow channel length, cross-sectional area, or temperature. As a result, mold cavities may be filed sequentially instead of simultaneously.

The artificially balanced manifold 160 of FIG. 6B includes a sprue 62, a first flow channel 174, and a second flow channel 176. The first flow channel 174 terminates at a first gate 178a and the second flow channel 176 terminates at a second gate 178b. The first flow channel 174 is shorter than the second flow channel 178 in this embodiment. The artificially balanced manifold 160 varies some other parameter of the flow channel (e.g., cross-sectional area or temperature) so that the material flowing through the manifold 160 provides balanced flow to each cavity similar to a naturally balanced manifold. In other words, thermoplastic material flowing through the first flow channel 174 will have about equal melt pressure to thermoplastic material flowing through the second flow channel 176. Because an artificially balanced, or unbalanced, feed manifold can include flow channels of different lengths, an artificially balanced, or unbalanced, feed manifold can make much more efficient use of space. Moreover, the feed channels and corresponding heater band channels can be machined more efficiently. Furthermore, naturally balanced feed systems are limited to molds having distinct, even numbers of mold cavities (e.g., 2, 4, 8, 16, 32, etc.). Artificially balanced, and unbalanced, feed manifolds may be designed to deliver molten thermoplastic material to any number of mold cavities.

The artificially balanced feed manifold 160 may also be constructed of a material having high thermal conductivity to enhance heat transfer to the molten thermoplastic material in hot runners, thus enhancing flow of the thermoplastic material. More specifically, the artificially balanced feed manifold 160 may be constructed of the same material as the mold to further reduce material costs and enhance heat transfer within the entire system.

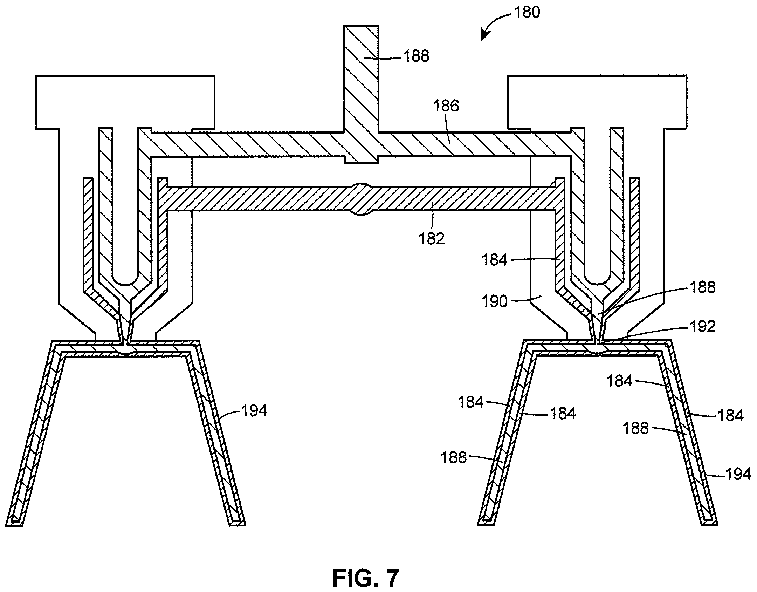

Turning now to Fig. 7, a co-injection manifold 180 is illustrated. The manifold includes a first machine nozzle path 182 for a first material 184, used to form inner and outer walls or "skin layer" of a molded product, and a second machine nozzle path 186 for a second material 188, used to form a core of the molded product. The co-injection manifold 180 includes a co-injection tip 190 that nests the second machine nozzle path 186 within the first machine nozzle path 182 at the hot tip orifice 192 for entry of the first and second materials 184, 188 into each mold cavity 194. Because the injection molding assembly of the present disclosure operates at low constant pressure, i.e. an injection pressure less than 6,000 psi, the first and second materials 184, 188 are introduced into the mold cavity 194 at a constant flow rate and form a uniform flow front that fills the mold cavity 194 from the hot tip orifice 192 to the opposite end 196 of the mold cavity.

The first material 184 may be molded so as to have a skin layer thickness of as little as 0.1mm without the second material 188 surging past or bursting through the skin layer. The ability to co-inject materials having such a thin skin layer permits greater use of polylactic acid (PLA), starch, acrylics, post-consumer recyclables (PCR), and post-industrial recyclables (PIR) in injection molded products, despite their inferior physical properties, such as brittleness of PLA, moisture sensitivity of starch and acrylics, and odor and discontinuities in PCR, because these materials, which are employed as the second (core) material 188, are shielded from view, shielded from contact with consumable products to be dispensed in consumer product containers, and shielded from contact with the skin of a user, by the skin layer, which may be a virgin material having superior physical properties, such as EVOH or nylons.

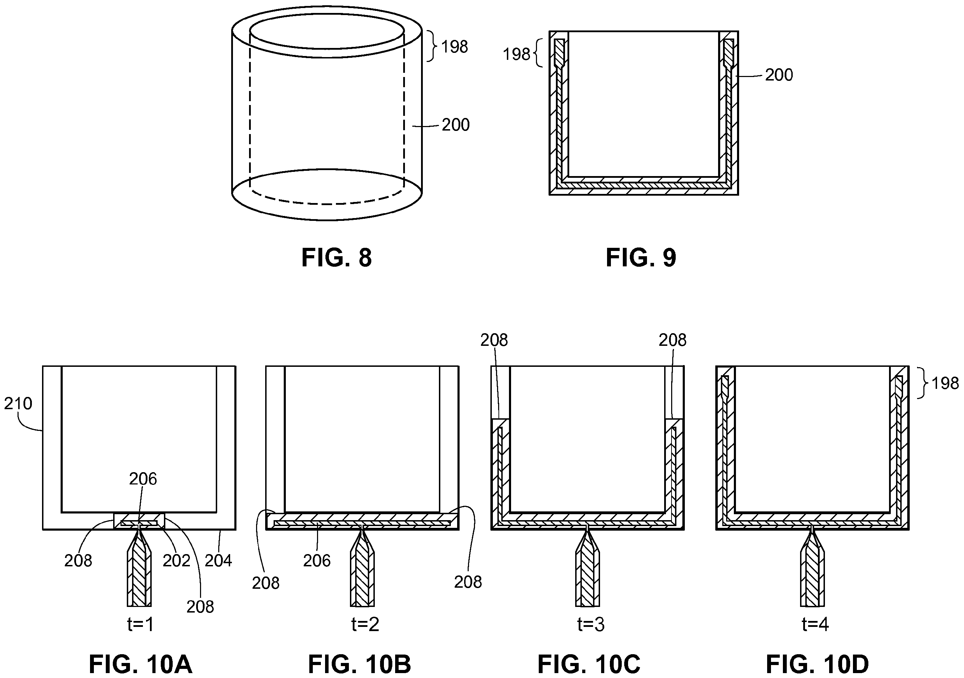

Figs. 8, 9, and 10a-10d illustrate the use of a co-injection system similar to that of Fig. 7 to achieve localized strengthening in a region 198 of a cap 200 where concentrated external forces are likely to be applied to the cap 200 for removal of the cap 200 from a container (not shown), such as for holding a consumable product like deodorant. In the region of the cap 200 where external forces are likely to be applied, it is important for the cap 200 to resist deformation. Otherwise, the cap 200, once removed from the container, may not properly re-mate with the container to provide a sealed closure. However, it is not necessary for the entire cap 200 to be made reinforced. Co-injection according to the present disclosure permits localizing the reinforcement to just that region 198 of the cap 200 most susceptible to concentrated external forces.

As illustrated in Figs. 10a-10d, first material 202 used to form a skin layer is co-injected into a mold cavity 204 with a second material 206. The second material 206 may be more deformation-resistant than the first material 202, but also may be more costly than the first material 202. The two materials 202, 206 are shot or delivered into the mold cavity at a low constant pressure, with a constant flow front 208. This flow front 208 provides a back pressure that maintains a constant relative pressure between the first and second materials 202, 206 as the mold cavity 210 is filled. During time intervals t=1 (Fig. 10a), t=2 (Fig. 10b), and t=3 (Fig. 10c), the control system is operated in such a manner that the relative pressure of the first and second materials 202, 206 is constant. To increase the concentration of the second, stronger material 206 relative to the first material 202 in the region 198, the control system is operated to increase the delivery pressure of the second material 206 relative to the first material 202 during time interval t=4 (Fig. 10d). This can be achieved by increasing the pressure of the machine nozzle controlling delivery of the second material 206, decreasing the pressure of the machine nozzle controlling delivery of the first material 202, or a combination thereof. The increased relative pressure of the second material 206 causes a higher concentration of the second material 206 relative to the first material 202 just upstream of the flow front 208 for the duration that the difference in relative pressure is maintained.

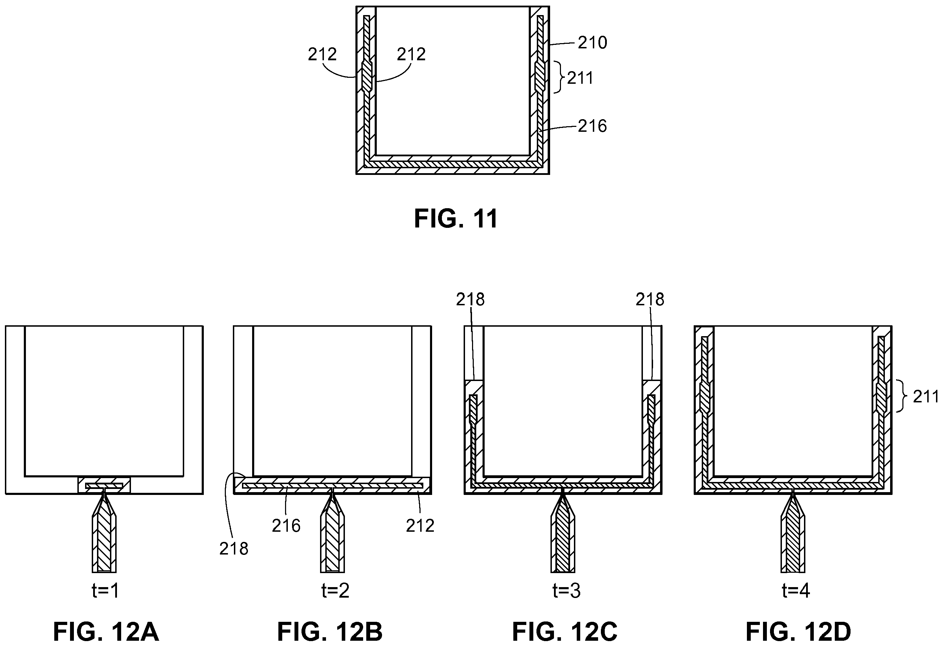

As illustrated in Figs. 11 and 12a-12d, if it were desired to mold a cap 210 having a localized region 211 of greater concentration of the second (core) material 216 relative to the first (skin layer) material 212 spaced farther upstream of the end of the cap 210 than the region 198, this could be obtained by operating the control system to increase the delivery pressure of the second material 216 relative to the first material 212 by increasing the pressure of the machine nozzle controlling delivery of second material 216, decreasing the pressure of the machine nozzle controlling delivery of first material 212, or a combination thereof, during a time interval prior to t=4, such as during t=3, then subsequently increasing the relative pressure of the first material 212. Because the increased concentration of the second material 216 in the region 211 may have a tendency to act like a plug or slug obstructing further flow of the first material 21 toward the flow front 218, it may be necessary to over-compensate, such as by decreasing the delivery pressure of the machine nozzle controlling delivery of second material 216 to a pressure even lower than the pressure of that machine nozzle prior to time interval t=3 (*i.e.,* decrease the second material relative to the first material by an amount greater than an amount by which the delivery pressure of the second material was increased relative to the first material during the second time interval), for at least a very short period of time in order to return the first and second materials 212, 216 to the desired relative thicknesses closest to the flow front 218, downstream of the reinforced region 211.

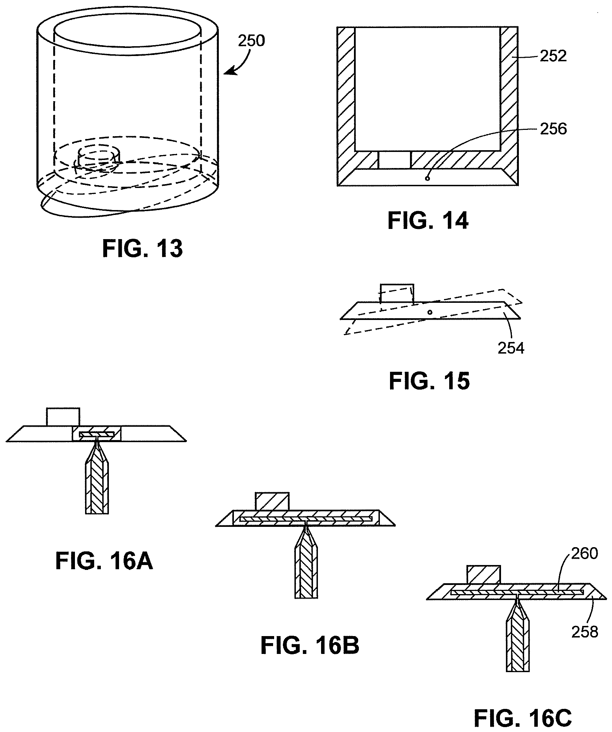

As discussed above, the co-injection system and method of the present disclosure may be employed to improve the homogeneity, and thus the recyclability, of disc tops and other injection molded caps having dynamic components, such as flip-up spouts. As illustrated, in Figs. 13-15 and 16a-c, a two-component cap 250 includes a stationary component 252, such as a generally cylindrical component that is securable to a bottle, and a dynamic component 254 that toggles between an open position (illustrated in phantom lines in Fig. 15) and a closed position, such as about a pivot axis 256 provided on the rim of the stationary component 252.

The dynamic component 254 is made of two co-injected materials, including a first material 258 that forms a skin layer, and a second material 260 that forms a core material. To avoid sticking between the stationary component 252 and the dynamic component 254 due to cohesion, all contacting surfaces of the stationary component 252 and the dynamic component 254 should be dissimilar from one another. To improve homogeneity, and thereby increase recyclability, the stationary component 252 may be molded entirely of the second material 260. Because the low constant pressure co-injection of the present disclosure permits molding an encapsulated material such as the second material 260 in a skin layer, such as the first material 258, having a thickness of less than 0.5mm, and as little as 0.1mm, the overall content of the cap 250 may be made so as to comprise such a small concentration of the first material 258 relative to the second material 260 that the cap 250 is considered as being made substantially of the second material 260. The problem of uniform materials in both the stationary component 252 and the dynamic component 254 is overcome by the skin layer of the first material 258. So long as the second material 260 is recyclable, however, the presence of that skin layer does not significantly detract from the recyclability. The second material 260 need not be completely encapsulated by the first material 258 to avoid problems associated with sticking or cohesion; it is sufficient for the second material 260 to be separated (by way of the first material 258) from all exposed surfaces of the dynamic component 254 that are adapted to directly contact the stationary component 252.

Drilling and Milling Machineability Index Test Methods

The drilling and milling machineability indices listed above in Table 1 were determined by testing the representative materials in carefully controlled test methods, which are described below.

The machineability index for each material was determined by measuring the spindle load needed to drill or mill a piece of the material with all other machine conditions (e.g., machine table feed rate, spindle rpm, etc.) being held constant between the various materials. Spindle load is reported as a ratio of the measured spindle load to the maximum spindle torque load of 75 ft-lb at 1400 rpm for the drilling or milling device. The index percentage was calculated as a ratio between the spindle load for 1117 steel to the spindle load for the test material.

The test milling or drilling machine was a Haas VF-3 Machining Center.

Drilling Conditions

Table 2

| Spot Drill | 118 degree 0.5" diameter, drilled to 0.0693" depth |
|---|---|
| Drill Bit | 15/32" diameter high speed steel uncoated jobber length bit |
| Spindle Speed | 1200 rpm |
| Depth of Drill | 0.5" |
| Drill Rate | 3 in/min |
| Other | No chip break routine used |

Milling Conditions

Table 3

| Mill | 0.5" diameter 4 flute carbide flat bottom end mill, uncoated (SGS part # 36432 www.sgstool.com) |
|---|---|
| Spindle Speed | 1200 rpm |
| Depth of Cut | 0.5" |
| Stock Feed Rate | 20 in/min |

For all tests "flood blast" cooling was used. The coolant was Koolrite 2290.

EDM Machineability Index Test Methods

The graphite and copper sinker EDM machineability indices listed above in Table 1 were determined by testing the representative materials in a carefully controlled test method, which is described below.

The EDM machineability index for the various materials were determined by measuring the time to burn an area (specifics below) into the various test metals. The machineability index percentage was calculated as the ratio of the time to burn into 1117 steel to time required to burn the same area into the other test materials.

Wire EDM

Table 4

| Equipment | Fanuc OB |
|---|---|
| Wire | 0.25 mm diameter hard brass |
| Cut | 1" thick x 1" length (1 sq. ") |
| Parameters | Used Fanuc on board artificial intelligence, override at 100% |

Sinker EDM - Graphite

Table 5

| Equipment | Ingersoll Gantry 800 with Mitsubishi EX Controller |
|---|---|
| Wire | System 3R pre-mounted 25 mm diameter Poco EDM 3 graphite |
| Cut | 0.1" Z axis plunge |
| Parameters | Used Mitsubishi CNC controls with FAP EX Series Technology |

Sinker EDM - Copper

Table 6

| Equipment | Ingersoll Gantry 800 with Mitsubishi EX Controller |
|---|---|
| Wire | System 3R pre-mounted 25 mm diameter Tellurium Copper |
| Cut | 0.1" Z axis plunge |
| Parameters | Used Mitsubishi CNC controls with FAP EX Series Technology |

The disclosed low constant pressure co-injection molding machines advantageously employ molds constructed from easily machineable materials. As a result, the disclosed low constant pressure injection molds (and thus the disclosed low constant pressure injection molding machines) are less expensive and faster to produce. Additionally, the disclosed low constant pressure injection molding machines are capable of employing more flexible support structures and more adaptable delivery structures, such as wider platen widths, increased tie bar spacing, elimination of tie bars, lighter weight construction to facilitate faster movements, and non-naturally balanced feed systems. Thus, the disclosed low constant pressure injection molding machines may be modified to fit delivery needs and are more easily customizable for particular molded parts.

It is noted that the terms "substantially," "about," and "approximately," unless otherwise specified, may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue. Unless otherwise defined herein, the terms "substantially," "about," and "approximately" mean the quantitative comparison, value, measurement, or other representation may fall within 20% of the stated reference.

Embodiments of the present disclosure can be used with embodiments for pressure control, as disclosed in US patent application 13/476,047 filed May 21, 2012, entitled "Alternative Pressure Control for a Low Constant Pressure Injection Molding Apparatus" (applicant's case 12128) and published as US 2012-0291885 A1.

Embodiments of the present disclosure can be used with embodiments for non-naturally balanced feed systems, as disclosed in US patent application 13/476,073 filed May 21, 2012, entitled "Non-Naturally Balanced Feed System for an Injection Molding Apparatus" (applicant's case 12130) and published as US 2012-0292823 A1.

Embodiments of the present disclosure can be used with embodiments for injection molding at low, substantially constant pressure, as disclosed in US patent application 13/476,197 filed May 21, 2012, entitled "Method for Injection Molding at Low, Substantially Constant Pressure" (applicant's case 12131Q) and published as US 2012-0295050 A1.

Embodiments of the present disclosure can be used with embodiments for injection molding at low, substantially constant pressure, as disclosed in US patent application 13/476,178 filed May 21, 2012, entitled "Method for Injection Molding at Low, Substantially Constant Pressure" (applicant's case 12132Q) and published as US 2012-0295049 A1.

Embodiments of the present disclosure can be used with embodiments for controlling molding processes, as disclosed in US patent 5,728,329 issued March 17, 1998, entitled "Method and Apparatus for Injecting a Molten Material into a Mold Cavity" (applicant's case 12467CC).

Embodiments of the present disclosure can be used with embodiments for controlling molding processes, as disclosed in US patent 5,716,561 issued February 10, 1998, entitled "Injection Control System" (applicant's case 12467CR).

It should now be apparent that the various embodiments of the products illustrated and described herein may be produced by a low constant pressure co-injection molding process. While particular reference has been made herein to products for containing consumer goods or consumer goods products themselves, it should be apparent that the low constant pressure injection molding method discussed herein may be suitable for use in conjunction with products for use in the consumer goods industry, the food service industry, the transportation industry, the medical industry, the toy industry, and the like.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

In this description non-standard units have been used. They can be converted into metric units in the following way:

$$MPa = psi \times 0,006895$$

$$0,01 \text{ "} = 0,000254 \text{ m}$$

$$1 \text{ Btu/(hr·ft·°F)} = 1.730735 \text{ W/(m·K)}.$$

## Claims

1. A co-injection molding system (10) comprising:

   a mold (28) comprising a
   material having an average thermal conductivity of more than 51.92 $W \cdot m^{-1} \cdot K^{-1}$ (30 BTU/HR FT °F);
   a screw (22) for feeding a first material into the mold;
   wherein the mold includes at least one mold cavity (32);
   **characterized in that**
   the at least one mold cavity (32) includes:

   a mold cavity with an L/T ratio of greater than 100; and
   **in that** the co-injection molding system further comprises a control system configured to maintain a substantially constant injection pressure of less than 41,37 MPa (6000psi) for the first and second materials.

2. The co-injection molding system of claim 1, further comprising a first gate and a second gate.

3. The co-injection molding system of claim 2, further comprising first and second materials wherein the first material is delivered to the mold cavity through the first gate and the second material is delivered to the mold cavity through the second gate.

4. The co-injection molding system of claim 1, wherein the second material is encapsulated by the first material as the first and second materials are delivered into the mold cavity.

5. The co-injection molding system of claim 4, wherein the second material is isolated from mold surfaces in the mold cavity by the first material.

6. The co-injection molding system of claim 1, wherein the control system varies an injection pressure of one of the first and second materials relative to the other of the first and second materials.

7. A method of using a co-injection molding system of claim 1.

8. The method of claim 7, further comprising co-injecting first and second materials wherein one of the first and second materials may flow relative to the other of the first and second materials during co-injection into the at least one mold cavity when the thickness of an outer of the two materials is less than 0.5mm.

9. The method of claim 7, further comprising co-injecting first and second materials wherein one of the first and second materials includes at least one of a group including polylactic acid (PLA), starch, polyolefins, ethylene, post-industrial recyclables (PIR), and post-consumer recyclables (PCR), and the other of the first and second materials is a barrier layer material.

10. The method of claim 9, wherein the barrier layer material includes Ethylene Vinyl Alcohol (EVOH).

11. The method of claim 9, wherein the sustainable material may flow relative to the barrier layer material during co-injection of the materials into the at least one mold cavity when the thickness of the barrier layer material is less than 0.5mm.

12. The method of claim 7, further comprising co-injecting first and second materials wherein the first material has a first color and the second material has a second color, the first color and the second color having a delta-E (dE) of at least 1.0.

**Patentansprüche**

1. Co-Spritzgusssystem (10), das umfasst:

eine Gussform (28), die umfasst
ein Material mit einer durchschnittlichen Wärmeleitfähigkeit von über 51,92 $W·m^{-1}·K^{-1}$ (30 BTU/HR FT °F) ;
eine Schraube (22) zum Eingeben eines ersten Materials in die Gussform;
wobei die Gussform mindestens einen Formhohlraum (32) umfasst;
**dadurch gekennzeichnet, dass**
der mindestens eine Formhohlraum (32) umfasst:

einen Formhohlraum mit einem L/T-Verhältnis von mehr als 100; und
dass das Co-Spritzgusssystem ferner ein Steuersystem umfasst, das dazu ausgelegt ist, einen im Wesentlichen konstanten Einspritzdruck von weniger als 41,37 MPa (6000psi) für das erste und das zweite Material aufrechtzuerhalten.

2. Co-Spritzgusssystem nach Anspruch 1, das ferner einen ersten Anguss und einen zweiten Anguss umfasst.

3. Co-Spritzgusssystem nach Anspruch 2, das ferner ein erstes und ein zweites Material umfasst, wobei das erste Material durch den ersten Anguss in den Formhohlraum gegeben wird und das zweite Material durch den zweiten Anguss in den Formhohlraum gegeben wird.

4. Co-Spritzgusssystem nach Anspruch 1, wobei das zweite Material durch das erste Material eingekapselt ist, wenn das erste und das zweite Material in den Formhohlraum gegeben werden.

5. Co-Spritzgusssystem nach Anspruch 4, wobei das zweite Material durch das erste Material von Gussformoberflächen in dem Formhohlraum isoliert ist.

6. Co-Spritzgusssystem nach Anspruch 1, wobei das Steuersystem einen Einspritzdruck eines des ersten und des zweiten Materials relativ zu dem anderen des ersten und des zweiten Materials variiert.

**7.** Verfahren zur Verwendung eines Co-Spritzgusssystems nach Anspruch 1.

**8.** Verfahren nach Anspruch 7, das ferner das gemeinsame Einspritzen eines ersten und eines zweiten Materials umfasst, wobei eines des ersten und des zweiten Materials relativ zu dem anderen des ersten und des zweiten Materials während des gemeinsamen Einspritzens in den mindestens einen Formhohlraum fließen kann, wenn die Dicke eines äußeren der beiden Materialien weniger als 0,5 mm beträgt.

**9.** Verfahren nach Anspruch 7, das ferner das gemeinsame Einspritzen des ersten und des zweiten Materials umfasst, wobei eines des ersten und des zweiten Materials mindestens eines von einer Gruppe umfasst, die Polyactid (PLA), Stärke, Polyolefine, Äthylen, post-industrielles Recycling-Material (PIR), und gebrauchtes Recycling-Material (PCR) umfasst, und das andere des ersten und des zweiten Materials ein Barriereschichtmaterial ist.

**10.** Verfahren nach Anspruch 9, wobei das Barriereschichtmaterial Äthylen-Vinylalkohol (EVOH) umfasst.

**11.** Verfahren nach Anspruch 9, wobei das nachhaltige Material während des gemeinsamen Einspritzens der Materialien in den mindestens einen Formhohlraum relativ zu dem Barriereschichtmaterial fließen kann, wenn die Dicke des Barriereschichtmaterials weniger als 0,5 mm beträgt.

**12.** Verfahren nach Anspruch 7, das ferner das gemeinsame Einspritzen des ersten und des zweiten Materials umfasst, wobei das erste Material eine erste Farbe hat und das zweite Material eine zweite Farbe hat, wobei die erste Farbe und die zweite Farbe ein delta-E (dE) von mindestens 1,0 haben.

**Revendications**

**1.** Système de moulage par co-injection (10) comprenant :

un moule (28) comprenant un matériau ayant une conductivité thermique moyenne de plus de 51,92 W·m$^{-1}$·K$^{-1}$ (30 BTU/HR FT °F) ;
une vis (22) pour alimenter un premier matériau dans le moule ;
le moule comprenant au moins une cavité de moule (32) ;
**caractérisé par le fait que**
l'au moins une cavité de moule (32) comprend :

une cavité de moule avec un rapport L/T supérieur à 100 ; et
**par le fait que** le système de moulage par co-injection comprend en outre un système de commande configuré pour maintenir une pression d'injection sensiblement constante de moins de 41,37 MPa (6000 psi) pour les premier et second matériaux.

**2.** Système de moulage par co-injection selon la revendication 1, comprenant en outre une première entrée et une seconde entrée.

**3.** Système de moulage par co-injection selon la revendication 2, comprenant en outre des premier et second matériaux, le premier matériau étant acheminé dans la cavité de moule à travers la première entrée et le second matériau étant acheminé dans la cavité de moule à travers la seconde entrée.

**4.** Système de moulage par co-injection selon la revendication 1, dans lequel le second matériau est encapsulé par le premier matériau à mesure que les premier et second matériaux sont acheminés dans la cavité de moule.

**5.** Système de moulage par co-injection selon la revendication 4, dans lequel le second matériau est isolé des surfaces de moule dans la cavité de moule par le premier matériau.

**6.** Système de moulage par co-injection selon la revendication 1, dans lequel le système de commande fait varier une pression d'injection de l'un des premier et second matériaux par rapport à l'autre des premier et second matériaux.

**7.** Procédé d'utilisation d'un système de moulage par co-injection selon la revendication 1.

**8.** Procédé selon la revendication 7, comprenant en outre co-injecter des premier et second matériaux, l'un des premier et second matériaux pouvant s'écouler par rapport à l'autre des premier et second matériaux pendant la co-injection dans l'au moins une cavité de moule lorsque l'épaisseur d'un extérieur l'un des deux matériaux est de moins de 0,5 mm.

9. Procédé selon la revendication 7, comprenant en outre co-injecter des premier et second matériaux, l'un des premier et second matériaux comprenant au moins un parmi un groupe comprenant de l'acide polylactique (PLA), de l'amidon, des polyoléfines, de l'éthylène, des matières recyclables post-industrielles (PIR), des matières recyclables post-consommation (PCR), et l'autre des premier et second matériaux étant un matériau de couche barrière.

10. Procédé selon la revendication 9, dans lequel le matériau de couche barrière comprend de l'éthylène-alcool de vinyle (EVOH).

11. Procédé selon la revendication 9, dans lequel le matériau durable peut s'écouler par rapport au matériau de couche barrière pendant la co-injection des matériaux dans l'au moins une cavité de moule lorsque l'épaisseur du matériau de couche barrière est de moins de 0,5 mm.

12. Procédé selon la revendication 7, comprenant en outre co-injecter des premier et second matériaux, le premier matériau ayant une première couleur et le second matériau ayant une seconde couleur, la première couleur et la seconde couleur ayant un delta-E (dE) d'au moins 1,0.

**FIG. 1**

**FIG. 2**

FIG. 3

**FIG. 4**

**FIG. 5**

TOP VIEW

## FIG. 6A

FRONT VIEW

## FIG. 6B

**FIG. 7**

FIG. 8

FIG. 9

FIG. 10A

FIG. 10B

FIG. 10C

FIG. 10D

FIG. 11

FIG. 12A

FIG. 12B

FIG. 12C

FIG. 12D

**FIG. 13**

**FIG. 14**

**FIG. 15**

**FIG. 16A**

**FIG. 16B**

**FIG. 16C**

**REFERENCES CITED IN THE DESCRIPTION**

**Patent documents cited in the description**

- JP 2004050622 A
- US 5800751 A
- GB 2059327 A
- US 20050170113 A1
- US 20090194915 A1
- US 20050170114 A1
- US 13476047 B
- US 20120291885 A1
- US 13476073 B
- US 20120292823 A1
- US 13476197 B
- US 20120295050 A1
- US 13476178 B
- US 20120295049 A1
- US 5728329 A
- US 5716561 A